# DEMANDE DE BREVET EUROPEEN

(11) **EP 2 228 458 A1**
(43) Date de publication de la demande: **15.09.2010**
(21) Numéro de dépôt: 09380168.6
(22) Date de dépôt: 20.10.2009
(51) Int. Cl.: C21B 3/08, C21C 5/54, C22B 7/04

(54) **Procédure séquentielle pour la gestion écologique et propre de la scorie blanches des aciéries en état pulvérulent et équipement pour la réalisation de cette procédure**

(30) Priorité: 27.02.2009 ES 200900555
(71) Demandeur: Corrugados Azpeitia, S.L., 20730 Azpeitia Guipuzcoa (ES)
(72) Inventeur: Eizaguirre Mancisidor, José Maria, 20730 Azpeitia (Gipuzkoa) (ES); Zubizarreta Galarraga, Sebastian, 20730 Azpeitia (Gipuzkoa) (ES); Aguirre Eizmendi, Pello, 20730 Azpeitia (Gipuzkoa) (ES)
(74) Mandataire: Urizar Barandiaran, Miguel Angel

(57) **Abrégé**

Procédure séquentielle pour la séparation de la scorie blanche des autres substances présentes dans le résidu résultant des procédés de coulage de métaux fondus et équipement pour la réalisation de cette procédure, où :
La procédure comprend (a) un refroidissement initial du résidu, (b) sa présentation à un flux d'air contrôlé, (c) le ramassage de la scorie blanche entraînée par ce flux et (d) le ramassage des autres substances présentes dans le résidu et son stockage dans un dépôt habilité pour cela.
L'équipement comprend (a) un dépôt où est stocké le résidu, (b) un système pour son refroidissement et (c) un système pour l'absorption de la scorie blanche en état pulvérulent par le moyen d'un flux d'air.
Applicable dans l'industrie sidérurgique.

## Description

Ce brevet fait référence à une procédure séquentielle permettant de séparer la scorie blanche en état pulvérulent du conglomérat de matériaux avec lesquels elle se trouve inévitablement mélangée dans sa séparation nécessaire du gros du métal dans la production dans des processus sidérurgiques, et à l'équipement permettant de réaliser dans la pratique cette procédure.

Cette substance est un des sous-produits ou résidus générés par l'activité sidérurgique, principalement dans les aciéries. La scorie blanche est produite principalement durant l'étape d'affinage, une étape durant laquelle la composition du métal fondu est ajustée dans une cuillère, la scorie blanche restant à la surface sur le métal fondu, étant donné sa densité inférieure. Habituellement, la scorie blanche est séparée du métal en laissant simplement que celui-ci soit versé au-dessus de la cuillère, durant un procédé de coulage, alors que la couche de scorie blanche flotte dans la partie supérieure. Au moment auquel la majeure partie du métal est sortie de la cuillère, celle-ci se ferme en laissant la scorie blanche, une petite partie de métal fondu et une grande variété d'autres résidus à l'intérieur de la cuillère. La scorie blanche est la partie principale de ce résidu, et, bien que la scorie blanche est raisonnablement homogène dans sa composition entre les coulages, nous ne pouvons pas affirmer la même chose des autres matériaux résiduels, de manière qu'il est constaté que le mélange de résidus qui restent dans la cuillère après le coulage présente une hétérogénéité significative d'un coulage à un autre, la nature de l'homogénéité étant difficilement contrôlable ou prévisible.

Aucune application pratique technique et économiquement viable pour ce mélange de résidus n'a pas encore été trouvée, entre autres car l'hétérogénéité imprévisible du mélange d'un coulage à un autre fait que ses propriétés soient variables, en limitant son application comme matériau technique, mais, en revanche, des applications sont connues pour la scorie blanche de manière isolée, par exemple comme charge pour la fabrication de ciment, et aussi pour certains autres résidus habituellement présents une fois isolés, par exemple la partie métallique du résidu qui peut être recyclée simplement en la fondant à nouveau.

Étant donné qu'aucune méthode technique et économiquement viable évitant la formation de ce mélange de résidus n'a été trouvée, la valorisation de chacun des sous-produits qui forment ce mélange passe inévitablement par un procédé de séparation. Cette invention se réfère à une nouvelle technique pour séparer la scorie blanche du reste des sous-produits ou résidus qui sont générés simultanément, dans le but d'obtenir une scorie blanche en état pulvérulent sans aucun autres résidus, transportable, pouvant être procédée, acceptablement homogène dans sa composition et propriétés et donc valorisable.

### État de la technique

Les procédés habituels de fabrication d'acier, par exemple dans des aciéries avec des fours à arc électriques, commencent par la fusion des matières premières dans le four. L'acier fondu sort du four vers une cuillère, dans laquelle est réalisée postérieurement l'opération d'affinage, dans laquelle différents matériaux sont ajoutés en fonction du résultat attendu. La scorie blanche se produit en conséquence des procédés de réduction et de désulfuration qui sont réalisés sur le matériel fondu et de l'ajout des différents additifs nécessaires, et, étant donné que sa densité est inférieure que l'acier à l'état liquide, elle flotte sur la partie supérieure du mélange dans la cuillère. Postérieurement, le contenu de cette cuillère est versé dans l'installation qui servira de moule et l'acier sera réfrigéré jusqu'à atteindre le format désiré, habituellement en billettes. Le vidage de la cuillère est réalisé en ouvrant un bec dans la partie inférieure de celle-ci, de telle façon que l'acier fondu est versé et vidé pratiquement jusqu'au niveau auquel la scorie se dépose et elle commencerait à sortir, mais la cuillère est fermée juste avant que ceci se produise pour éviter la pollution du dernier acier sorti de la cuillère. Ainsi, une fois la cuillère vidée, il reste à l'intérieur un mélange formé principalement par de la scorie blanche, mais aussi par de l'acier, des alliages de fer, des substances de fontes et d'autres substances dans un mélange hétérogène, qui pourrait se décrire comme de la scorie blanche avec des impuretés.

Aucune application pratique, économiquement et techniquement viable pour ce mélange de substances n'a pas encore été trouvée, en conséquence, ce mélange est habituellement considéré simplement comme un résidu et il est placé dans des conteneurs contrôlés, ce qui implique une pollution et un coût dans tous les cas, mais, en revanche, il existe des applications qui valorisent certaines de ces substances séparément. C'est le cas de la scorie blanche, qui, de manière isolée, est une matière première valable et acceptée pour son utilisation dans la fabrication de ciment. Nous pourrions penser que, étant donné que la majeure partie du mélange résiduel se compose de scorie blanche, tout le mélange pourrait être valable pour la production de ciment, mais il arrive que certaines des substances restantes du résidu soient nuisibles pour cette application. Par exemple les substances qui peuvent s'oxyder, comme l'acier, peuvent créer des problèmes importants de résistance aux constructions réalisées avec un ciment qui les contient, en entraînant un risque grave. En plus de ce type de contre-indications et effets secondaires de l'utilisation possible du mélange résiduel tel quel, il arrive que la composition de ce mélange, et donc de ses propriétés techniques, soient hétérogènes d'un coulage à un autre, et sa variation est imprévisible, les conditions minimum exigibles à une substance techniquement valorisable ne sont pas respectées, c'est-à-dire qu'elle maintienne au moins ses propriétés dans une gamme raisonnablement acceptable. C'est en revanche le cas de la scorie blanche isolée des autres substances potentiellement présentes dans le mélange résiduel.

Comme conclusion à ce qui a été exposé, pour qu'une valeur ou une application pratique puisse être donnée à la scorie blanche, il est indispensable d'isoler la scorie blanche des autres substances qui l'accompagnent durant la production et la séparation du métal durant le coulage, étant donné qu'il s'agit de la seule façon d'obtenir un métal suffisamment homogène ou dont les propriétés sont ajustables au niveau industriel pour pouvoir prédire et contrôler la qualité des produits pour lesquels il existe une contribution de la scorie blanche durant leur fabrication et dans tous les cas pour éviter des effets non désirés de son utilisation.

Étant donnée cette problématique de son inapplicabilité pratique, cette scorie blanche impure a été traité traditionnellement comme un résidu et elle est déposée dans des conteneurs contrôlés. Le fait d'avoir besoin d'un conteneur implique un certain niveau de pollution et un coût de gestion, de plus en plus élevé dans les pays industrialisés à cause de la tendance croissante des taxes économiques sur les activités polluantes. D'autre part, bien que la scorie blanche à haute température présente une viscosité élevée et se comporte comme un matériau pâteux, elle devient très pulvérulente en refroidissant. Un matériau de ces caractéristiques, en plus de produire de nombreuses saletés dans le site de production et ses différentes zones de stockage temporaire et définitif, présente un grand impact visuel en cas de dispersion causée par le vent, produisant un impact et une alarme sociale hautement négatifs.

Face à cette situation, la valorisation de la scorie blanche, de tout le mélange de substances, a été considérée postérieurement, en réintroduisant ce résidu dans le four électrique. De cette façon, l'acier qu'elle contient est utilisé comme matière première et les autres substances, la scorie blanche pure incluse, sont utilisée comme charge du four. Avec le temps, il a été vérifié qu'en appliquant cette solution, bien que le coût direct de gestion du résidu soit réduit ainsi que l'impact environnemental et social de celui-ci, les résultats finaux obtenus en appliquant cette pratique n'améliorent pas l'efficacité globale de l'ensemble, en générant parfois des consommations énergétiques supérieures ou en obtenant des rendements du four inférieurs.

En plus des solutions conventionnelles décrites, étant donnée l'importance du problème, nous devons souligner que la séparation des différents résidus ou sous-produits obtenus par la purge du coulage de l'acier est un sujet vastement traité dans la défense de la propriété intellectuelle des procédés et équipements. Nous devons souligner que pratiquement toutes les solutions existantes se concentrent dans l'extraction et l'exploitation maximum des particules métalliques présentes dans les différents résidus ou scories générées par les procédés sidérurgiques. Il existe différents brevets à ce sujet. En voici certains.

Dans le brevet MX9709179A un procédé pour récupérer et éliminer les résidus produits dans les cubilots et les métaux contenus dans ceux-ci par voie humide est expliqué. Le procédé se caractérise par le fait que les composants résiduels humides sont séchés en utilisant des gaz de déchet du système et sont réintroduits dans le four. Ce procédé élimine les coûts élevés des déchets dans des décharges et rend plus efficace l'utilisation de substances utiles disponibles et de l'énergie du gaz gaspillée.

Le brevet US7377955B1 expose un système pour le traitement de scorie à sec permettant de la refroidir et de la classer postérieurement grâce à différentes grilles. Postérieurement, grâce à un système magnétique, les parties métalliques sont séparées et une poudre de scories est obtenue, sans métaux, qui est renvoyée dans le four pour l'exploiter.

Le brevet US2008020538A1 décrit aussi une installation dont la base est semblable à la précédente, dans laquelle la poudre ultrafine des scories est placée dans un réservoir dans lequel elle est séchée et classée par granulométrie, pour séparer postérieurement les parties métalliques des parties non-métalliques avec un dispositif magnétique.

Le brevet RU2298586C2, de son côté, présente un système pour séparer la partie métallique de la scorie, d'abord par une classification du mélange en fonction de la taille des particules (en-dessous de 0,3 mm, entre 0,3 et 5 mm et au-dessus de 5 mm) et, postérieurement, en appliquant différentes intensités de champs magnétiques pour chaque granulométrie considérée.

Dans le brevet US2008115624A1 est exposé un système pour la séparation des parties de la scorie riches en métaux pauvres. Pour cela, la scorie est maintenue en état fondu, et à une température élevée pour garantir une certaine viscosité et, avec un système de rampes avec un petit angle d'inclinaison, la masse est déplacée de telle manière que les particules métalliques les plus lourdes se déposent au fond du système de rampes. De cette manière, la première portion de scorie obtenue est pauvre en métal, alors que la dernière est plus riche. Ce système peut être répété toutes les fois nécessaires, en fonction de la richesse désiré, et peut aussi inclure un système magnétique à la fin pour extraire les particules métalliques.

Dans le brevet US2008116233A1 est présenté un système de séparation du métal de la scorie basé sur un tourbillon dans lequel est introduit un matériau inerte permettant d'exploiter la différence de densité entre le métal et la scorie pour faciliter sa séparation par son élimination du tourbillon dans sa partie inférieure.

Dans le brevet US3819361A1, un dépôt est situé à la sortie de la scorie dans lequel, grâce aux forces d'induction, qui touchent uniquement les parties métalliques, le métal est renvoyé dans le four ou la cuillère. Cette méthode permet de gagner du temps, étant donné qu'il n'est pas nécessaire d'interrompre le procédé de fusion et la température descend à peine.

Le brevet WO2006131372A1-WO200805260A1-KR20080015383 fait référence à un procédé électrolytique, continu ou discontinu, pour séparer les métaux existants dans la scorie en les chauffant jusqu'à la fusion et en le réduisant postérieurement pour obtenir différents composants après avoir ajouté les catalyseurs correspondants (en fonction des métaux à séparer).

Le brevet UA76653C2 présente un procédé pour obtenir la scorie dans lequel son utilisation postérieure pour la production de ciment est déjà mentionné. Ce procédé consiste en la séparation de la partie métallique de la scorie par des méthodes magnétiques et l'obtention de la scorie, d'une taille déterminée, en ajoutant des additifs déterminés pour provoquer la formation des granulométries désirées.

De son côté, le brevet UA11989UU se concentre plus sur la classification des parties métalliques extraites de la scorie, que sur le procédé de séparation, normalement à partir de systèmes de sélection magnétique.

Finalement, le brevet EP1745873A1 présente un système pour séparer la scorie basé sur un filtre fabriqué avec un matériau céramique poreux, qui permet que le matériel fondu passe à travers lui, tout en retenant la scorie. Ce filtre est monté sur un système de guidage qui se déplace dans tout le récipient dans lequel se trouve le fluide, et dans la partie supérieure duquel flotte la scorie à éliminer.

Tous ces brevets ont pour objet l'extraction de la scorie pour, postérieurement, réaliser l'évaluation de la scorie résultante en la réintroduisant dans le four et en la gérant comme un résidu dans une décharge. Les différents systèmes de séparation utilisés sont référence à différentes technologies; et les systèmes conçus, peu ou très sophistiqués, vont du criblage de la scorie pour la séparer par tailles, jusqu'à des procédés basés sur l'attraction magnétique, la différence de densité, les caractéristiques rhéologiques ou l'affinité électrochimique des éléments à séparer.

D'un autre côté, nous pouvons aussi mentionner que le procédé pour exploiter la scorie dans la fabrication de ciments est aussi présente dans différents brevets, par exemple: MX9505142A, EP1900700A1, SK50762006, mais sujet qui nous incombe dans ce document, la séparation préalable de la scorie en état pulvérulent, n'est pas mentionné dans ceux-ci.

Pour conclure cette étude de l'état de l'art, nous pouvons indiquer qu'aucun des brevets consultés se réfère à la séparation de la scorie en état pulvérulent, mais que, jusqu'à aujourd'hui, l'objectif principal est la séparation d'autres composants existants à l'intérieur pour leur valorisation individuelle, en plus de la valorisation de la propre scorie résultante, quel que soit le type, est réalisé en la renvoyant à l'intérieur du four dans le meilleur des cas.

### Explication générale de l'invention

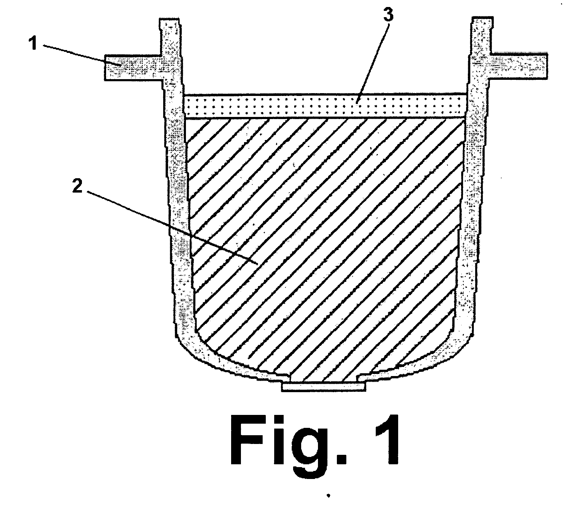

Durant le procédé d'obtention de l'acier, après la phase de réalisation du procédé d'affinage, comme il est représenté sur la Figure 1, nous disposons d'une cuillère (1) qui contient principalement un bain d'acier fondu (29, et une couche de résidus (3) en flottaison sur le bain, à cause de leur densité inférieure, dénommée de manière générique scorie blanche, qui se forme principalement de scorie blanche proprement dite mais aussi d'autres substances résiduelles provenant des impuretés de la matière première, des additifs, fondants, etc. variables d'un coulage à un autre.

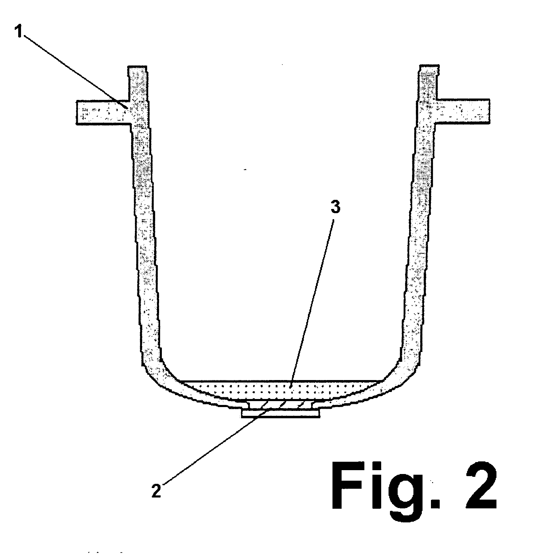

L'acier, le produit principal recherché dans ce procédé, est versé à travers la base de la cuillère dans l'installation qui servira de moule, par exemple grâce à une installation de coulage continu, et, quelques instants avant que la couche de résidus (3) commence à sortir de la cuillère (1), on arrête de le verser pour garantir que l'on ne produit pas d'acier contaminé ou de qualité inappropriée. La figure 2 montre l'état de la cuillère au moment auquel la cuillère n'est plus vidée, avec un mélange résiduel restant formé par la couche de résidus (3), qui contient la scorie blanche, entre autres substances, et une petite partie de bain d'acier fondu (2) restant pour assurer qu'aucun résidu n'est sorti de la cuillère vers l'étape suivant du procédé de production d'acier. Depuis lors, ce mélange résiduel sera dénommé mélange résiduel primaire (4).

La procédure à laquelle se réfère la présente invention commence à ce moment, auquel il faut complètement vider la cuillère pour l'utiliser postérieurement et gérer le mélange résiduel primaire (4) en le rejetant ou en le valorisant partiellement ou totalement.

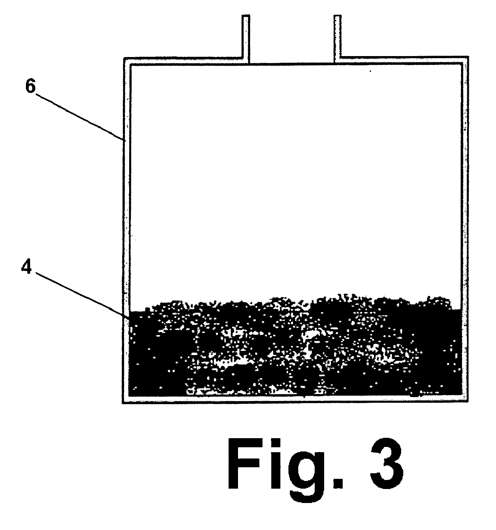

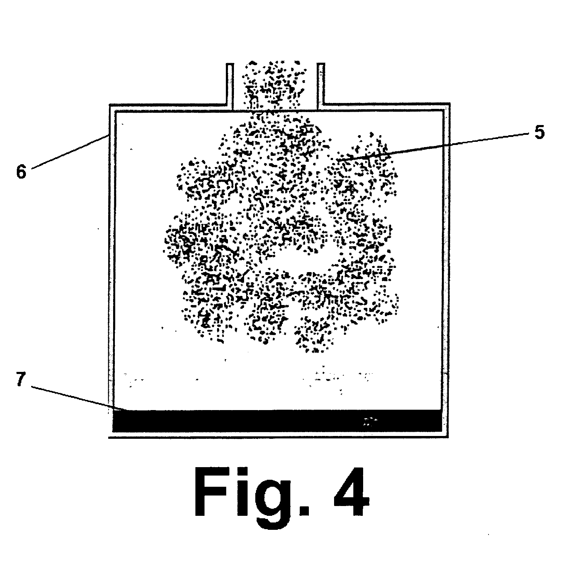

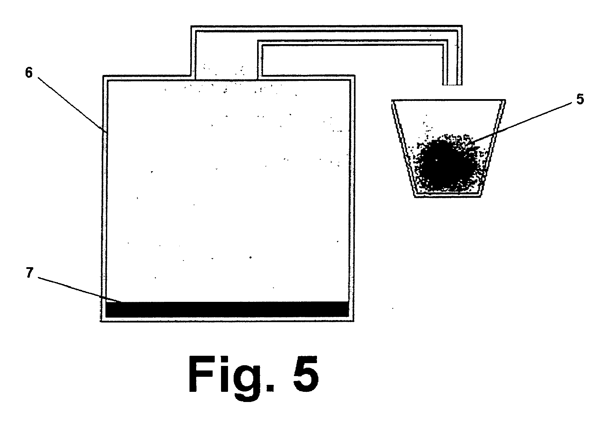

Les phases générales dans lesquelles est détaillé le phénomène physique principal qui définit la nouveauté du procédé, représentées dans les figures 3, 4 et 5 sont : le refroidissement du mélange résiduel primaire (4) qui contient la scorie blanche selon un profil de réduction de température déterminé dans le temps, de manière à obtenir que le contenu de la scorie blanche du mélange résiduel primaire (4) se trouve en état pulvérulent et la séparation de la scorie blanche pure (5) par rapport aux autres éléments du mélange résiduel primaire (4) dans une chambre de séparation (6) par aspiration de cette scorie blanche, en laissant sur la base de cette chambre de séparation (6) un mélange résiduel secondaire (7) sans scorie blanche. De cette façon, à la fin du procédé, nous réussissons à isoler la scorie blanche pure (5) qui se dépose finalement dans une trémie ou conteneur, du reste des substances qui l'accompagnaient dans le mélange résiduel primaire (4) qui sont stockées dans leur trémie ou conteneur correspondant spus forme de mélange résiduel secondaire (7).

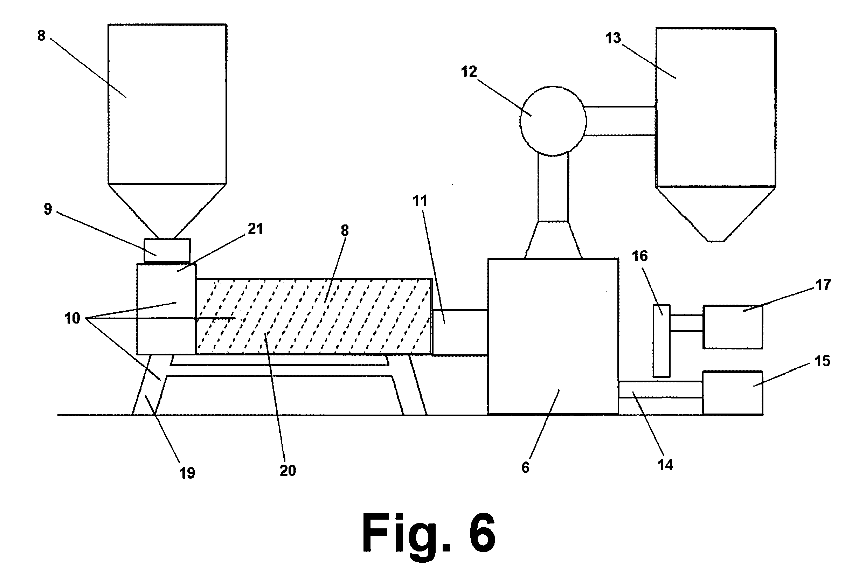

Pour la réalisation du phénomène décrit ci-dessus, en règle générale, les procédés et les systèmes décrits ci-dessous et représentés sur la figure 6 sont nécessaires : stockage du mélange résiduel primaire (4) dans une trémie de réception (8), dosage du mélange résiduel primaire (4) à travers un doseur (9), réfrigération du mélange résiduel primaire (4) dans un système de refroidissement (10), alimentation du mélange résiduel primaire (4) réfrigéré à travers un alimentateur (11) vers une chambre de séparation (6), séparation et extraction de la scorie blanche pure (5) par un système d'aspiration (12) stockage de celui-ci dans un conteneur (13), extraction du mélange résiduel secondaire (7) par un système mécanique d'extraction (14) et stockage de celui-ci dans un conteneur (15).

Ci-dessous sont décrits plus en détail chacun des procédés précédents et la fonction de chacun des éléments impliqués dans ceux-ci. La température du mélange résiduel primaire (4) dans la cuillère (1) immédiatement après qu'elle se soit fermé est d'environ 1 600 degrés centigrades, et elle se comporte comme une substance pâteuse. Pour des raisons de sécurité et d'efficacité, avant de pouvoir la manipuler au niveau industriel, le mélange résiduel primaire (4) doit se trouver à une température inférieure à la température de manipulation (TM), une température à laquelle son comportement est encore pâteux mais il peut être transvasé avec une marge de sécurité supérieure. Dans cet étant, il n'est pas encore possible de séparer la scorie blanche par le procédé décrit dans la présente invention, étant donné que celui-ci ne présente pas l'état pulvérulent, pour cela, il sera nécessaire de fournir la réfrigération adéquate du mélange résiduel primaire. D'autre part, étant donné les grands volumes de production de résidu qui se donnent dans la pratique, la méthode et les moyens destinés au traitement de ce résidu doivent disposer d'une capacité de traitement suffisante pour pouvoir assimiler une production pratiquement constante dans le temps et disposer de mécanismes pour atténuer l'effets des différences possibles dans la production du résidu.

Une fois la température du mélange résiduel primaire (4) en-dessous de la température de manipulation (TM), la première étape consiste à verser le mélange résiduel primaire (4) dans une trémie de réception (8). La trémie de réception (8) a la fonction de stocker temporairement le mélange résiduel primaire (4) devant être traité et agit comme un premier poumon régulateur du procédé. Le profil dans le temps du débit de stockage (CA) dans cette trémie dépendra du volume de production du résidu qui, de son côté, dépendra du volume de production de l'installation sidérurgique. L'extraction du contenu de la trémie (8) est réalisé à l'aide du doseur (9) qui règle l'alimentation du mélange résiduel primaire (4) de la trémie de réception vers le système de refroidissement (10) en l'approvisionnant avec un profil dans le temps de débit de refroidissement (CE) adéquat en fonction de la puissance ou la capacité de refroidissement (PE) du système de refroidissement (10). Le système de refroidissement a la fonction d'extraire la chaleur ou de réfrigérer le mélange résiduel primaire (4) provenant du doseur (9) de manière à ce que le profil d'évolution dans le temps de température du mélange résiduel primaire (4) soit adéquat pour que, à la fin du procédé, la scorie blanche contenue dans le mélange résiduel primaire (4) se trouve en-dessous de la température de séparation (TS), à laquelle la scorie blanche se trouve en état pulvérulent et présente les propriétés de granulométrie et densité permettant son absorption par aspiration. Ces propriétés, qui sont précisément celles qui font que la scorie blanche soit un résidu difficile à gérer à cause du degré de complication de la manipulation d'une substance pulvérulente, sont de leur côté précisément le facteur clé sur lequel se base la présente invention pour la séparation de la scorie blanche des autres substances contenues dans le mélange résiduel primaire (4), étant donné que les autres substances présentes dans le mélange résiduel ne présentent pas ces propriétés ni ce comportement après le procédé de refroidissement. Une fois ce refroidissement obtenu, le mélange résiduel primaire (4) est introduit dans la chambre de séparation à travers l'alimentateur (11), qui a la fonction d'introduire le mélange résiduel primaire (4) dans les conditions résultantes à la fin du procédé de refroidissement dans la chambre de séparation (6) avec un profil dans le temps de débit de séparation (CS) adéquat selon la capacité d'extraction de la chambre de séparation (6). Cette capacité d'extraction est définie par la dépression de séparation et d'extraction (PS), qui est une différence de pressions générée par le système d'aspiration (12) entre l'intérieur de la chambre de séparation (6) et un autre point du propre système d'aspiration (12) extérieur à la chambre de séparation. Cette dépression est générée pour créer un flux d'air partant de l'intérieur de la chambre de séparation (6) vers le point externe du système d'aspiration (12) suffisant pour absorber la scorie blanche pulvérulente, mais sans entraîner les autres substances contenues dans le mélange résiduel primaire (4) de résidus. Comme nous l'avons mentionné, il existe la circonstance que les autres substances qui accompagnent la scorie blanche dans le mélange résiduel primaire (4) ne présentent pas le même comportement aussi pulvérulent et la densité granulométrique de ceux de la scorie blanche, il existe une fourchette de dépressions dans laquelle la poussière de la scorie blanche est entraînée, mais pas les autres substances, et la présente invention tire profit de cette situation. De cette façon, la dépression d'extraction et de séparation (PS) devra toujours se situer dans les limites définies par cette fourchette de dépressions. Le système d'aspiration (12) est le responsable de la génération et du contrôle de la dépression d'extraction et de séparation (PS) de manière à se maintenir dans la fourchette de dépressions dans laquelle se produit le phénomène de séparation de la scorie blanche pure (5) sans toucher les autres substances qui l'accompagnent dans le mélange résiduel primaire (4) et il dispose, aussi, de moyens pour générer et contrôler la dépression, avec les conduites, éléments de ramassage et dispositifs de traitement des matériaux pulvérulents, comme par exemple un cyclone, adéquats pour canaliser la scorie blanche pure (5) extraite jusqu'à la déposer finalement dans un conteneur de stockage (13) de la scorie blanche pure (5). En parallèle, le système mécanique d'extraction de résidus (14) détient la fonction d'extraire le mélange résiduel secondaire (7) restant à l'intérieur de la chambre de séparation (6) avec un profil de débit d'extraction (CR) adéquat pour éviter l'accumulation excessive de cette substance dans la chambre de séparation. Après cette opération, le même système mécanique d'extraction de résidus (14) finit par déposer le mélange résiduel secondaire (7) dans un conteneur de résidus (15). Optionnellement le mélange résiduel secondaire (7) extrait de la chambre de séparation (6) peut être soumis à un procédé de séparation d'éléments ferriques par un système de séparation magnétique (16) qui séparerait les éléments ferriques (15) en laissant un mélange résiduel tertiaire qui se déposerait dans le conteneur de résidus (15) alors que les éléments ferriques séparés seraient stockés dans un conteneur (17) de stockage de matériel ferrique recyclable.

Pour matérialiser cette méthode dans la pratique, la présente invention inclut un équipement permettant la réalisation optimale du refroidissement et la séparation postérieure de la scorie blanche en état pulvérulent et qui permet aussi que tout le procédé décrit ci-dessus soit réalisé de manière continue dans le temps s'il existe une alimentation de mélange résiduel primaire (4). Cette équipement intègre le système de refroidissement (10), la chambre de séparation (6), ainsi que l'alimentateur (11) entre ces deux éléments, et le système mécanique d'extraction (14) du mélange résiduel secondaire. Cet équipement doit être accompagné des moyens techniques et humains assumant les fonctions non intégrées dans l'équipement même comme : la fonction de dosage à l'entrée du système de refroidissement, la fonction de génération de dépression par rapport à l'intérieur de la chambre de séparation (6) et les fonctions de transvasement, filtrage, traitement et stockage de la scorie blanche pure (5) ainsi que du mélange résiduel secondaire (7) après la séparation et l'extraction de la chambre de séparation (6).

Le système de refroidissement (10) de l'équipement se compose d'un corps cylindrique (18) principal creux, de diamètre (D) et de longueur (L), placé quasi horizontalement sur un châssis de support (19). À l'intérieur de ce corps cylindrique (18) est disposé un ensemble d'ailettes intérieures (20) placées sur la surface intérieure du corps cylindrique (18) dans une configuration pseudo-hélicoïdale selon l'axe longitudinal du cylindre et pseudo-radiale selon la coupe transversale du cylindre. Ce corps cylindrique (18) est doté d'un seul degré de liberté de mouvement lui permettant de tourner sur son axe longitudinal. L'équipement est doté des moyens d'actionnement permettant de faire pivoter le cylindre sur son axe à une vitesse de rotation (VG) contrôlable. Sur l'une des extrémités du cylindre, le système de refroidissement (10) dispose d'un dépôt d'alimentation (21) fixe, dont la fonction est de recevoir le mélange résiduel primaire (4) fourni par le moyen de dosage disposé pour cela et de positionner le mélange résiduel primaire (4) qu'il contient contre les ailettes intérieures (20) disposée plus près de l'extrémité du corps cylindrique (18) coïncidant avec le dépôt d'alimentation (21) fixe. En appliquant et en maintenant dans le temps une vitesse de rotation (VG) sur le corps cylindrique (18), les ailettes intérieures (20) exercent un effet d'entraînement du mélange résiduel primaire (4) vers l'intérieur du corps cylindrique, et ce même entraînement et l'effet de la gravité font que le mélange résiduel primaire (4) continue à s'alimenter à l'intérieur du corps cylindrique (18) si l'alimentation du mélange résiduel primaire (4) au dépôt d'alimentation (21) est maintenue. L'équipement dispose des moyens d'étanchéité ne permettant pas la fuite du mélange résiduel primaire (4) par le mouvement rotatif produit entre le dépôt d'alimentation (21) et le corps cylindrique (18). La disposition des ailettes intérieures (20) tout au long de l'intérieur du corps cylindrique (18) obtient un effet d'entraînement du mélange résiduel primaire (21) sur toute la longueur du corps cylindrique (18) si le mouvement de rotation du corps cylindrique (18) est maintenu. De son côté, le corps cylindrique (18) est constamment réfrigéré, par exemple en générant un débit (CF) de fluide réfrigérant sur la surface extérieure du cylindre, ce qui donne, que le mélange résiduel primaire (4) en avançant en longueur à l'intérieur du corps cylindrique (18), réduise sa température avec l'effet d'échange calorifique avec le propre corps cylindrique (18). De cette façon, nous obtenons que, quand le mélange résiduel primaire (4) parcourt toute la longueur du corps cylindrique (18) du système de refroidissement (10) la scorie blanche contenue dans le mélange résiduel primaire (4) se trouve à une température inférieure à la température de séparation (TS) en état pulvérulent et présente les propriétés de granulométrie et densité permettant son absorption par aspiration, alors que les autres matériaux ne présentent pas ces caractéristiques. Sur l'extrémité du corps cylindrique (18) opposé au dépôt d'alimentation (21), le corps cylindrique (18) rejoint une chambre de séparation (6), fixe aussi. De même que sur l'autre extrémité, l'équipement dispose des moyens d'étanchéité ne permettant pas la fuite du mélange résiduel primaire (4) par le mouvement relatif qui se produit entre le corps cylindrique (18) et la chambre de séparation (6). La chambre de séparation dispose d'une ouverture qui coïncide avec l'extrémité du corps cylindrique (18) avec laquelle elle est connectée et le mélange résiduel primaire (4) qui parcourt sur la longueur l'intérieur du corps cylindrique (18) grâce à la rotation de celui-ci et à l'effet d'entraînement des ailettes intérieures (20), il finit par se déposer à l'intérieur de la chambre de séparation (6) dans des conditions optimales pour la séparation de la scorie blanche par aspiration. De son côté, la chambre de séparation dispose d'une autre ouverture à travers de laquelle un équipement d'aspiration externe est connecté, capable de générer la dépression d'extraction et de séparation (PS) adéquate pour séparer la scorie blanche. La chambre de séparation (6) dispose aussi des moyens d'étanchéité adéquats pour que l'union entre la chambre de séparation (6) et le système d'aspiration (12) soit adéquat pour l'obtention de la dépression et pour que le flux d'air qui entraîne la scorie blanche vers l'extérieur de la chambre de séparation (6) à travers du système d'aspiration (12) se produise. Ce type de système est habituel dans l'industrie sidérurgique et ils sont utilisés par exemple comme moyen d'aspiration de la poussière d'aciérie qui reste en suspension dans le hangar où se situe le four. De plus, sur la base de la chambre de séparation (6), est disposé un mécanisme d'extraction, formé par exemple par un entraîneur à couronne, capable d'extraire à la demande le mélange résiduel secondaire (7) qui se dépose sur la basé de la chambre de séparation (6) au moment de l'extraction de la scorie blanche.

Tant le procédé comme l'équipement décrits peuvent présenter de multiples configurations qui partagent le même principe de fonctionnement, mais, dans tous les cas, un principe d'équilibre entre tous les paramètres principaux du procédé décrit ci-dessus devra se donner pour que le procédé soit stable et durable. D'autre part, dans chaque configuration particulière, en disposant de moyens de réglage, il sera possible de réaliser différents régimes de fonctionnement, selon les valeurs de débit, températures, temps, vitesses, puissances, etc. avec lesquels nous désirons travailler. D'autre part, étant donné que différents équipements peuvent intervenir dans le procédé, un grand champ d'intégrations possibles et d'automatisations orientées vers le coordination de tout l'ensemble s'ouvre au développement de la capacité de monitorisaiton et de contrôle en temps réel des différents paramètres de fonctionnement du procédé, et en dernier lieu, au développement de toute une intelligence permettant d'optimiser automatiquement les paramètres qui déterminent le régime de fonctionnement du système en fonction des besoins de traitement à chaque moment.

### Description des dessins

Sur la Figure 1 apparaît une cuillère qui contient l'acier fondu et, sur celui-ci, la couche de scorie blanche en flottaison avant d'être vidée.

Sur la Figure 2 apparaît la cuillère (1) une fois vidée par sa partie inférieure, la scorie blanche restant à l'intérieur et une partie de l'acier qui n'a pas été vidé.

Sur la Figure 3 est exposée la disposition du mélange résiduel primaire (4) immédiatement avant que le procédé de séparation de la scorie blanche pure (5) débute.

Sur la Figure 4 est exposée la disposition du mélange résiduel primaire (4) durant le procédé de séparation de la scorie blanche pure (5).

Sur la Figure 5 est exposée la disposition du mélange résiduel primaire (4) après le procédé de séparation de la scorie blanche pure (5).

Sur la Figure 6 est exposé le diagramme du procédé complet avec toutes les opérations principales et secondaires impliquées dans la séparation de la scorie blanche par le procédé décrit dans la présente invention.
1.- Cuillère
2.- Bain d'acier fondu
3.- Couche de résidus formée après l'opération d'affinage et contenant principalement de la scorie blanche.
4.- Mélange résiduel primaire formé par la scorie blanche, l'acier restant à l'intérieur de la cuillère comme mesure de sécurité pour éviter que la scorie blanche ne sorte durant le procédé d'obtention d'acier et d'autres résidus hétérogènes qui sont générés dans la cuillère.
5.- Scorie blanche pure sans d'autres substances avec lesquelles elle coexiste dans le mélange résiduel primaire (4).
6.- Chambre de séparation où se produit la séparation du mélange résiduel primaire (4) en scorie blanche pure (5) et mélange résiduel secondaire (7).
7.- Mélange résiduel secondaire résultant de l'extraction de la scorie blanche pure (5) du mélange résiduel primaire (4).
8.- Trémie de réception dans laquelle est stocké temporairement le mélange résiduel primaire (4) en attente d'être traité.
9.- Doseur utilisé pour extraire le débit désiré de mélange résiduel primaire (4) pour être traité.
10.- Système de refroidissement par lequel la température du mélange résiduel primaire (4) est réduit, jusqu'à ce trouver en-dessous de la température à laquelle la scorie blanche se présente en état pulvérulent et a les propriétés de granulométrie et densité permettant de la séparer du mélange résiduel primaire (4) par aspiration.
11.- Alimentateur utilisé pour transférer le débit désiré du mélange résiduel primaire (4) après le refroidissement à la chambre de séparation (6)
12.- Système d'aspiration généré par la dépression qui, de son côté, provoque la génération du flux d'air de l'intérieur de la chambre de séparation (6) qui sépare la scorie blanche pure (5) du mélange résiduel primaire (4) et l'extrait de la chambre de séparation (6).
13.- Conteneur de stockage dans lequel est déposée finalement la scorie blanche pure (5) séparée et extraite de la chambre de séparation (6).
14.- Système mécanique d'extraction de résidus qui extrait le mélange résiduel secondaire (7) de la chambre de séparation (6).
15.- Conteneur de stockage dans lequel est déposé finalement le mélange résiduel secondaire (7) après son extraction de la chambre de séparation (6), ou le mélange résiduel tertiaire, le cas échéant, après l'extraction du mélange résiduel secondaire (7) de la chambre de séparation (6) et la séparation magnétique des substances ferriques.
16.- Système de séparation magnétique utilisé pour séparer les éléments ferriques du mélange résiduel secondaire (7) par attraction magnétique.
17.- Conteneur de stockage dans lequel sont déposées finalement les substances ferriques séparées par le système de séparation magnétique (16).
18.- Corps cylindrique creux qui forme le corps principal du système de refroidissement (10).
19.- Châssis sur lequel se soutient le corps cylindrique (18).
20.- Ensemble d'ailettes intérieures disposées sur la surface intérieure du corps cylindrique (18) responsables du transvasement du mélange résiduel primaire (4) sur toute la longueur de l'intérieur du corps cylindrique (18) pour son refroidissement.
21.- Dépôt d'alimentation du système de refroidissement (10) dans lequel est introduit le mélange résiduel primaire (4) pour être traité.

TM.- Température de manipulation à partir de laquelle le mélange résiduel commence à être facilement manipulable par des moyens industriels.

CA.- Profil dans le temps du débit de stockage avec lequel est stocké le mélange résiduel primaire (4) à une température inférieure à la température de manipulation (TM) dans la trémie de réception (8).

CE.- Profil dans le temps de débit du mélange résiduel primaire (4) qui est traité dans le système de refroidissement (10).

PE.- Puissance de refroidissement du système de refroidissement, ou capacité dans le temps d'extraction de chaleur, et réduction de température conséquente du débit de mélange résiduel primaire (4) qui est traité dans le système de refroidissement (10).

TS.- Température de séparation en-dessous de laquelle la scorie blanche se trouve en état pulvérulent et avec des propriétés de densité et granulométrie permettant l'aspiration de la scorie blanche.

CS.- Profil dans le temps de débit de séparation et extraction de la scorie blanche pure (5) dans la chambre de séparation (6).

PS.- Dépression produite par le système d'aspiration (12) par rapport à l'intérieur de la chambre de séparation (6) causant la génération du flux d'air de l'intérieur de la chambre de séparation (6) qui sépare et entraîne la scorie blanche pure (5) sans entraîner les autres substances du mélange résiduel primaire (4).

CR.- Profil dans le temps du débit d'extraction du mélange résiduel secondaire (7) de la chambre de séparation (6).

D.- Diamètre du corps cylindrique (18)

L.- Longueur du corps cylindrique (18)

VG.- Vitesse de rotation du corps cylindrique (18)

CF.- Débit de réfrigération du corps cylindrique (18)

### Description détaillée d'une réalisation particulière

Une réalisation particulière possible de l'invention décrite dans le présent document répond à la configuration suivante.

En premier lieu, le mélange résiduel primaire (4) est versé dans la cuillère (1) sur un emplacement ouvert destiné à cette utilisation. Quand la température du mélange résiduel primaire descend jusqu'à une température TM de 1 200 °C, son ramassage est effectué avec un véhicule avec une pelle et il est introduit par pelletées à l'intérieur du dépôt d'alimentation (21) du système de refroidissement (10) qui est simplement un conteneur en tôle métallique rectangulaire qui se remplit de mélange résiduel primaire (4) et qui présente une ouverture dans la partie inférieure de la face en contact avec l'une des extrémités du corps cylindrique (18) rotatif. Le corps cylindrique (18) rotatif est aussi métallique, et il est disposé à l'horizontale et présente une longueur (L) approximative de 5 mètres et un diamètre (D) d'environ 1,5 mètres. Les deux extrémités du corps cylindrique rotatif (18) sont complètement ouvertes et quand le dépôt d'alimentation (21) se remplit, une partie du mélange résiduel primaire (4) entre dans le corps cylindrique (18) par le simple effet de la gravité, et, à mesure que ce qui entre est entraîné à l'intérieur, il est remplacé grâce à la gravité par un nouveau mélange résiduel primaire (4). Le corps cylindrique (18) est soutenu sur ses deux extrémités et dispose de roulements permettant sa rotation. D'autre part, le corps cylindrique dispose sur la surface extérieure de sa zone centrale d'une couronne dentée qui s'engrène sur le pignon de sortie d'un réducteur actionné par un moteur électrique d'environ 100 Kw de puissance, en donnant le mouvement giratoire à l'ensemble à une vitesse de rotation nominale de 30 r.p.m. Sur la surface intérieure du corps cylindrique sont disposées trois ailettes hélicoïdales sur la longueur d'environ 30 centimètres de hauteur en direction radiale selon la section transversale. Ces ailettes, avec la rotation du cylindre, provoquent grâce à une poussée un mouvement de translation linéaire sur tout corps libre appuyé sur l'intérieur du corps cylindrique. La réfrigération de la surface extérieure du corps cylindrique (18) est réalisée par un bain d'eau provenant de la conduite perforée située à l'horizontale et parallèle à la génératrice supérieure du corps cylindrique (18). Le débit d'eau de réfrigération est approximativement de 10 litres par minute. Sur son autre extrémité, le corps cylindrique est en contact avec un dépôt en tôle, rectangulaire aussi, d'environ 3 mètres de largeur et de profondeur, par 2,5 de hauteur qui agit comme chambre de séparation (6). Ce dépôt dans la zone de contact avec le cylindre (18) présente une ouverture à partir de laquelle le mélange résiduel primaire (4) arrive environ à une température de 600 degrés centigrades et dans laquelle la scorie blanche est totalement pulvérulente et a une densité approximative de 1,5 kilogrammes par décimètre cubique. Dans la partie supérieure de ce dépôt, une conduite de coupe carrée d'environ 1 mètre de côté la connecte à un système externe d'aspiration dont les compresseurs, à l'aide d'un amplificateur ou booster, sont capables de générer une dépression approximative de 400 millimètres d'eau par rapport à l'intérieur du dépôt et dans ces conditions se produit la séparation et l'extraction de la scorie blanche pure (5). De plus, le dépôt dispose d'une porte latérale à travers laquelle le mélange résiduel résultant est extrait manuellement si nécessaire pour le remplissage.

## Revendications

1. Procédure séquentielle pour la séparation de la scorie blanche des autres substances présentes dans le résidu résultant de procédés de coulage de métaux fondus, **caractérisée par le fait qu'**elle comprend les opérations suivantes :
- Un refroidissement initial du résidu à une température inférieure à la température à laquelle la scorie blanche se trouve en état pulvérulent.
- La présentation du résidu à un flux d'air contrôlé qui produit l'entraînement de la scorie blanche en état pulvérulent mais ceci sans entraîner les autres substances présentes dans le résidu.
- Le ramassage de la scorie blanche entraînée par le flux d'air contrôlé et son stockage dans un dépôt adapté pour cela.
- Le ramassage des autres substances présentes dans le résidu par des moyens mécaniques et leur stockage dans un dépôt adapté pour cela.

2. Procédure séquentielle pour la séparation de la scorie blanche selon la revendication 1, **caractérisée par le fait qu'**elle comprend un procédé de séparation des éléments ferriques par des procédés magnétiques et leur ramassage postérieur et stockage dans un dépôt aménagé pour cela.

3. Équipement pour la séparation de la scorie blanche des autres substances présentes dans le résidu résultant des procédés de coulage des métaux fondus, conformément au procédé des revendications 1 et 2, **caractérisé par le fait qu'**il comprend :
- Un dépôt où est stocké le résidu d'entrée.
- Un système pour le refroidissement du résidu.
- Un système pour l'absorption de la scorie blanche en état pulvérulent par le moyen d'un flux d'air.

4. Équipement pour la séparation de la scorie blanche selon la revendication 3, **caractérisé par le fait qu'**il comprend un système d'extraction mécanique des substances restantes du résidu une fois la scorie blanche séparée.

5. Équipement pour la séparation de la scorie blanche selon la revendication 4, **caractérisé par le fait qu'**il comprend un système de séparation par des procédés magnétiques des substances ferriques présentes dans le résidu extrait par le système d'extraction mécanique.

6. Équipement pour la séparation de la scorie blanche selon la revendication 3, **caractérisé par le fait que** le système de refroidissement du résidu comprend un corps cylindrique creux rotatif disposé sensiblement à l'horizontale, dont le mouvement de rotation provoque l'avancée progressive du résidu dans son intérieur, et obtient le refroidissement du résidu avec l'échange calorifique qui se produit entre le résidu et la paroi du cylindre durant le parcours du résidu à l'intérieur du cylindre.

7. Équipement pour la séparation de la scorie blanche selon la revendication 6, **caractérisé par le fait que** le cylindre est aussi réfrigéré, en le soumettant à une convection forcée avec un fluide à une température inférieure à celle atteinte avec l'échange calorifique avec le résidu qui parcourt son intérieur.

8. Équipement pour la séparation de la scorie blanche selon la revendication 3, **caractérisé par le fait que** le système pour l'absorption de la scorie blanche en état pulvérulent par le moyen d'un flux d'air comprend un conteneur avec une ouverture pour l'alimentation du résidu qui contient la scorie et avec une autre ouverture qui est connectée à un système capable de générer une différence de pression par rapport à l'intérieur du conteneur qui provoque le flux d'air qui entraîne et absorbe la scorie blanche.

9. Équipement pour la séparation de la scorie blanche selon la revendication 8, **caractérisé par le fait que** le débit du flux d'air généré peut être réglé par la variation de la coupe de l'ouverture connectée au système capable de générer la différence de pression par rapport à l'intérieur du conteneur.

10. Équipement pour la séparation de la scorie blanche selon la revendication 8, **caractérisé par le fait que** le conteneur comprend une autre ouverture dans sa partie inférieure à travers de laquelle les autres substances présentes dans le résidu sont extraites une fois la scorie blanche absorbée par des procédés mécaniques.

11. Équipement pour la séparation de la scorie blanche selon la revendication 10, **caractérisé par le fait que** le procédé mécanique d'extraction de substances résiduelles comprend un transporteur à couronne.
